(19) Europäisches Patentamt
European Patent Office
Office européen des brevets

(11) Veröffentlichungsnummer: **0 163 085**
**B1**

(12) # EUROPÄISCHE PATENTSCHRIFT


(45) Veröffentlichungstag der Patentschrift: **22.06.88**

(21) Anmeldenummer: **85104529.4**

(22) Anmeldetag: **15.04.85**

(51) Int. Cl.⁴: **C 09 D 3/72**, C 09 D 3/82, D 06 N 3/14, C 08 L 75/04 // (C08L75/04, 33:06, 33:02, 1:28, 83:07, 61:00, 63:00, 79:02)


(54) **Dispersionszusammensetzungen, Verfahren zu ihrer Herstellung und ihre Verwendung.**


(30) Priorität: **28.04.84 DE 3415920**

(43) Veröffentlichungstag der Anmeldung: **04.12.85 Patentblatt 85/49**

(45) Bekanntmachung des Hinweises auf die Patenterteilung: **22.06.88 Patentblatt 88/25**

(84) Benannte Vertragsstaaten: **AT BE CH DE FR GB IT LI NL**

(56) Entgegenhaltungen:
**EP - A - 0 104 377**
**US - A - 4 278 578**



(73) Patentinhaber: **BAYER AG, Konzernverwaltung RP Patentabteilung, D-5090 Leverkusen 1 Bayerwerk (DE)**

(72) Erfinder: **Thoma, Wilhelm, Dr., Birkenweg 25, D-5090 Leverkusen 3 (DE)**
Erfinder: **Langel, Rolf, Hüscheiderstrasse 85, D-5090 Leverkusen 3 (DE)**
Erfinder: **Schröer, Walter, Dr., Nicolai Hartmann-Strasse 29, D-5090 Leverkusen 1 (DE)**


**EP 0 163 085 B1**


Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft ein Verfahren zur Herstellung von wässrigen Dispersionszusammensetzungen, indem
A) in wässrige Dispersionen von Polyurethanen Aa) oder Gemischen aus Aa) und wässrigen Dispersionen von Poly(meth)acrylaten Ab),
B) wässrige, carboxylgruppenhaltige Polymerlösungen zur Verdickung eingebracht und
C) mit selbstvernetzenden Polyorganosiloxansystemen, ohne deren vorhergehende Dispergierung in Wasser, vermischt werden,
und dass diesen Dispersionszubereitungen
D) Vernetzungsmittel für die Polyurethane Aa), für die carboxylgruppenhaltigen Polymere B) und gegebenenfalls für die Poly(mere)acrylate Ab)
zugesetzt werden.

Erfindungsgegenstand sind auch entsprechende Dispersionszusammensetzungen und ihre Verwendung zur Beschichtung und zum Bedrucken, insbesondere in geringer Auflagemenge, von Unterlagen, bevorzugt textilen und lederartigen Unterlagen, unter Ausbildung hydrophober Beschichtungen, welche nach der Trockenstufe bei erhöhten Temperaturen vernetzt sind.

Die verschiedensten textilen Substrate werden im Direktbeschichtungsverfahren mit Polyurethan-Lösungen und -Dispersionen beschichtet, wobei auch mehrere Striche hintereinander üblich sind. Es werden für das Direktbeschichtungsverfahren auch Polyacrylat-Lösungen und -Dispersionen verwendet.

Es ist bereits bekannt (US-PS 4278578) wässrige Dispersionen von carboxylgruppenhaltigen Polyurethanen, carboxylgruppenhaltigen Copolymeren und in wässriger Alkalilösung lösliche Kunststoffe als Beschichtungsmaterial, das mit polyfunktionellen Aziridinen vernetzt wird, zu verwenden.

Weiterhin werden in der E-A-O 104377 Beschichtungsmassen auf Basis blockierter NCO-Prepolymerer, Polyamine, Polyurethan-Dispersionen und Verdickungsmittel wie Salze von Poly(meth)acrylsäure oder Carboxylmethylcellulose beschrieben.

Stand der Technik ist es auch, Polyacrylat-Dispersionen mit Dispersionen von Siliconen zu verschneiden und mit solchen Mischungen Direktbeschichtungen herzustellen.

Nach DE 3105148 A 1 werden auch Dispersionen von Mischpolymeren aus Acrylsäureestern, Ethylen, Vinylacetat und/oder anderen Monomeren, in Abmischung mit bestimmten Haftmitteln und Siliconen vom Si-Vinyl/SiH-Typ bei Pt-katalysierter Vernetzung zur Direktbeschichtung verwendet.

Bei Einsatz dieser Beschichtungsmittel und ihrer Gemische zeigen sich eine Reihe von Nachteilen. Polyacrylate und deren Mischpolymere sind aufgrund ihrer relativ guten Löslichkeit in organischen Lösungsmitteln nachteilig für die Chemischreinigungsbeständigkeit der damit beschichteten textilen Substrate. Nachteilig wirken sich auch die in den Polyacrylat-Dispersionen bzw. Dispersionen der Mischpolymeren enthaltenen Emulgatoren aus, die über ihre Hydrophilie die Waschbeständigkeit und die Hydrophobie der Beschichtungsartikel stark vermindern.

Einen weiteren Nachteil stellt die Verwendung von wässrigen Silicon-Dispersionen dar, da dadurch besonders hydrophile Emulgatoren in das Beschichtungsgemisch eingebracht werden.

Die vorliegende Erfindung betrifft wässrige Dispersionszusammensetzungen, insbesondere für wässrige, streichfähige Beschichtungs- oder Druckpasten, dadurch gekennzeichnet, dass sie
A) wässrige Dispersionen von Polyurethanen Aa) oder Gemische von wässrigen Dispersionen von Polyurethanen Aa) und wässrigen Dispersionen von Poly(meth)acrylaten Ab),
B) wässrige, carboxylgruppenhaltige Polymerlösungen als Verdicker,
C) in Wasser nicht vordispergierte, selbstvernetzende Polyorganosiloxansysteme und
D) Vernetzungsmittel für die Polyurethane, für die carboxylgruppenhaltige Polymere B) und gegebenenfalls für die Poly(meth)acrylate enthalten.

Die erfindungsgemässen Dispersionszusammensetzungen sind nach einem Verfahren erhältlich, in dem
A) in wässrige Dispersionen von Polyurethanen Aa) oder Gemischen aus Aa) und wässrigen Dispersionen von Poly(meth)acrylaten Ab),
B) wässrige, carboxylgruppenhaltige Polymerlösungen zur Verdickung eingebracht und
C) mit selbstvernetzenden Polyorganosiloxansystemen, ohne deren vorhergehende Dispergierung in Wasser, vermischt werden und dass diesen Dispersionszubereitungen
D) Vernetzungsmittel für die Polyurethane Aa), für die carboxylgruppenhaltigen Polymeren B) und für die gegebenenfalls vorhandenen Poly(meth)-acrylate Ab)
zugesetzt werden.

Ein weiterer Erfindungsgegenstand ist die Verwendung der erfindungsgemässen Dispersionszusammensetzungen zur Beschichtung und zum Bedrucken von Unterlagen, insbesondere zum Beschichten und Bedrucken von textilen oder lederartigen Unterlagen in geringer Auflagenmenge, unter Ausbildung vernetzter relativ hydrophober Beschichtungen nach dem Trocknen.

Die erfindungsgemässen Pasten zum Beschichten textiler Substrate und die auf diese Weise beschichteten Artikel haben gegenüber dem Stand der Technik folgende Vorteile:

Die selbstvernetzenden Silicone (auch «Polyorganosiloxane» oder kurz «Polysiloxane» genannt) C) werden ohne vorherige Dispergierung in Wasser, also ohne Einsatz von Emulgatoren (welche zu unerwünschter Hydrophilie der Beschichtungen führen würde), in die mittels B) verdickten Dispersionen eingearbeitet.

Der Polyurethananteil in der Beschichtungspaste erhöht die Beständigkeit der Beschichtung gegenüber der quellenden Wirkung organischer Lösemittel, erhöht also die Chemischreinigungsbeständigkeit der beschichteten Artikel. Die hydrophilen Eigenschaften der als Verdicker für die

PUR- und Poly(meth)acrylat-Dispersionen A) notwendigerweise verwendeten wässrigen, carboxylgruppenhaltigen Polymerlösungen B) werden durch deren Vernetzung mittels D) in starkem Ausmass vermindert und auf diese Weise die Waschbeständigkeit der Beschichtungsartikel verbessert. Die erfindungsgemässen vernetzten, hydrophoben, weichen, wasch- und reinigungsbeständigen Beschichtungen lassen sich nach dem Direktstreichverfahren auch in sehr geringen Auflagestärken bzw. mit sehr geringen Auflagemengen auf den Substraten herstellen.

Es werden vorzugsweise rein wässrige, lösungsmittelfreie Pasten zur Beschichtung einschliesslich Vernetzung, eingesetzt.

Für die erfindungsgemässen Streichpasten werden PUR-Dispersionen Aa) verwendet, die in bekannter Weise hergestellt werden. Verfahren für die Herstellung erfindungsgemäss geeigneter stabiler, wässriger Polyurethan-Dispersionen werden beispielsweise in den deutschen Auslegeschriften 1178586 (US-Patent 3756992), den deutschen Offenlegungsschriften 2314512 (US-Patent 3905929), 2314513 (US-Patent 3920598), 2320719 (Britische Patentschrift 1465572), 2446440, 2555534 und 2811148 sowie von D. Dieterich in «Angewandte Chemie» 82, 53/1970), beschrieben. Die dort genannten und auch in weiteren Veröffentlichungen entsprechend dem Stand der Technik der PU-Dispersionsherstellung genannten Ausgangsmaterialien und Herstellungsverfahren können hier Verwendung finden.

Die für die Streichpastenherstellung gegebenenfalls mitverwendeten Poly(meth)acrylat-Dispersionen Ab) werden in üblicher Weise hergestellt; sie enthalten zum Beispiel folgende Komponenten: (Meth)acrylsäureester mit $C_1$-$C_{18}$-Alkoholen, wie Acrylsäureethylester, Acrylsäurebutylester, Methacrylsäure-methylester, Acrylsäurestearylester, Acrylnitril, Acrylamid, N-Methylolacrylamid, N-Methoxymethyl-acrylamid, Acrylsäure, Itaconsäure bzw. deren Ammonium- oder Alkalisalze.

Das Verhältnis Polyurethan-Feststoff zu Poly(meth)acrylat-Feststoff in den aus Gemischen Polyurethan-Dispersionen Aa) und Poly(meth)acrylat-Dispersionen Ab) sollte 100:0 bis 100:150, bevorzugt 100:10 bis 100:80, betragen.

Die Silicone C) sind vorzugsweise selbstvernetzende, additionsvernetzende Siliconmischungen, bei denen an Siliconverbindungen mit Si-Vinyl-Gruppen Siliconverbindungen mit SiH-Gruppen, vorzugsweise in Gegenwart von Platinmetall-Katalysatoren, addiert werden. Derartige additionsvernetzende Siliconmischungen werden beispielsweise in der DE-OS 1668159 und der US-PS 3159601 beschrieben.

Als Komponenten eignen sich insbesondere

W) vinylgruppenhaltige Polydimethylsiloxane mit einem Molekulargewicht von etwa 10.000 bis 25.000, vorzugsweise mit einem (im wesentlichen endständigen) Vinylgruppengehalt von 0,2 bis 10 Gew.-%,

X) Si-H-Gruppen-haltige Polydimethylsiloxane mit Molekulargewichten von etwa 1000 bis 20.000, vorzugsweise mit einem SiH-Gehalt von 0,1 bis 8 Gew.-%, z. B. Trimethylsiloxy-methylhydrogensiloxy-polydimethylsiloxan,

Y) gegebenenfalls eine niedermolekulare, cyclische, vinylgruppenhaltige Methylsiloxanverbindung, z. B. cyclisches Methylvinyl-tetrasiloxan und

Z) ein Platinkatalysator, insbesondere Platin-Siloxankomplexe, wie sie durch Umsetzung von Platinverbindungen wie Platinhalogeniden mit Vinylsiloxanverbindungen oder Si-H-gruppenhaltigen Polydimethylsiloxanen, vorzugsweise vom Typ X oder W, insbesondere vom Typ W, entstehen und insbesondere in Lösung des Platinkomplexes in W) oder X) eingesetzt werden.

Die Mengen von W:X:Y:Z verhalten sich dabei beispielsweise wie (80–95) : (5–15) : (0,1–0,5) : (0,01–0,2).

Das Verhältnis Polyurethan-Aa)- (und gegebenenfalls Poly(meth)acrylat-Ab)-Feststoff zu Silicon C)-Feststoff aus (W + X + Y + Z) sollte zwischen 100:5 und 100:200, bevorzugt zwischen 100:10 und 100:150, liegen.

Als W) können beispielsweise die an sich bekannten und im wesentlichen endständige, Si-C-gebundene Vinylgruppen aufweisenden Polyorganosiloxane verwendet werden, wie sie in der EP-A1-58239, Seite 3 bis Seite 5, als Komponente 1 beschrieben werden.

Als X) können beispielsweise die an sich bekannten Si-H-gruppenhaltigen Organopolysiloxane eingesetzt werden, wie sie als Komponente 2) in der EP-A1-58239, Seite 5 bis 6 angeführt sind.

Eine ausführliche Aufzählung der an sich bekannten Katalysatoren Z) findet sich gleichfalls in der EP-A 58239, Seite 6 bis 7, als Komponente 3).

Eine als Komponente Y) besonders geeignete Komponente ist das Methylvinyl-tetrasiloxan

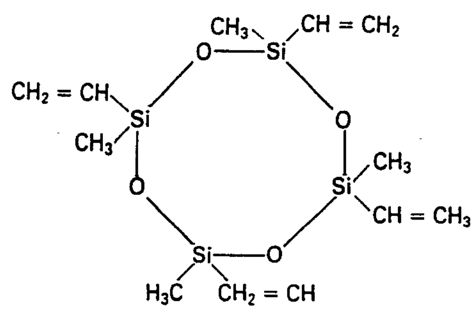

Als Verdicker B) für die Dispersion(en) A) (Polyurethane Aa) oder die Gemische aus Polyurethan- und Poly(meth)acrylat-Dispersionen) werden carboxylgruppenhaltige Polymere in wässriger Lösung verwendet, wie sie üblicherweise als Verdikker benutzt werden. Die wässrigen Lösungen sollten 2–25%ig sein. Genannt seien zum Beispiel Poly(meth)acrylsäuren, Carboxymethylcellulosen, vor allem deren Alkali- und Ammoniumsalze, einschliesslich organischer Ammoniumsalze mit zum Beispiel Triethylamin oder Triethanolamin oder N-Methylmorpholin. Es werden 1–10 Gew.-%, bevorzugt 3–5 Gew.-%, der wässrigen Verdickerlösungen bezogen auf die Summe der wässrigen Dispersionen Aa) und Ab) eingesetzt.

Als Vernetzungsmittel D) für die in den Streichpasten enthaltenen Polyurethane, gegebenenfalls vorhandene Poly(meth)acrylate und auch insbesondere für die als Verdicker eingesetzten wasserlöslichen, carboxylgruppenhaltigen Polymere dienen beispielsweise Harnstoff- und Melamin-Formaldehydharze, Polyaziridine und Polyepoxide.

Beispielhaft seien genannt: Mit Methanol oder Butanolen ganz oder teilweise, vorzugsweise überwiegend veretherte Harnstoff- und Melaminmethylolharze, wie sie beispielsweise als Melamin-hexamethylolether, oder als formulierte Handelsprodukte der Hoechst-AG unter der Bezeichnung Maprenal(R) MF 900, 910, 915, 920, 927, 800, 650, 700 und 750 oder als Cassurit HML erhältlich sind; mit Ethylenimin oder Propylenimin umgesetzte Polyisocyanate, sog. Aziridinharnstoffe (Bayer, DBP 1 153 161), Umsetzungsprodukte von Acrylsäureestern mehrwertiger Alkohole und Ethylenimin und/oder Propylenimin, zum Beispiel Reaktionsprodukte aus Trimethylolpropantriacrylat mit Propylenimin; Polyepoxide aus Dian- und Epichlorhydrin oder Polyalkohole und Epichlorhydrin.

Die Vernetzer können als Feststoff oder zumeist mehr als 50%ige Lösungen in Mengen von 0,5–10 Gew.-% Feststoff, bevorzugt 1–10 Gew.-%, besonders bevorzugt 2–5 Gew.-%, bezogen auf die Summe des Gewichts der wässrigen Dispersionen Aa) bis Ab) verwendet werden.

Die Streichpasten können in bekannter Weise Pigmente, Farbstoffe, Füllstoffe, Licht- und Hydrolysestabilisatoren, Antioxydantien, Flammenschutzmittel, Antistatika, Verlaufhilfen, Entschäumer, fungizide und bakterizide Mittel, Griffmittel und ähnliche, an sich bekannte Additive enthalten.

Der Auftrag der Pasten kann nach üblichen Beschichtungs- oder Druckverfahren erfolgen.

Die Auflagemengen (Feststoff) sind dabei vorzugsweise gering, z.B. 5 bis 25, vorzugsweise 8 bis 15 $g/m^2$. Sie können jedoch auch in höheren, üblichen Auflagemengen, z.B. 25 bis 60 $g/m^2$ aufgebracht werden.

Die Trocken- und Reaktionstemperaturen liegen dabei zwischen 90 und 170 °C, vorzugsweise 110 und 160 °C, wobei – je nach Verweilzeit – kurzfristig auch höhere Temperaturen Anwendung finden können.

Beispiel 1

I) Herstellung der Dispersionszusammensetzung (streichfähige Beschichtungspaste) – erfindungsgemäss –.
500 g einer PUR-Dispersion P-1 und
500 g einer Polyacrylat-Dispersion A 1
werden nach Zugabe von 100 g Wasser und 3,0 g eines Entschäumers auf Silicon-Basis mit 50 g einer 25%igen, wässrigen Polyacrylsäurelösung versetzt und mittels conc. Ammoniak auf pH 8–9 eingestellt. Das verdickte Dispersionsgemisch hat eine Viskosität von 4000 mPas bei 25 °C. Nach Zugabe von 20 g einer 50%igen wässrigen Melaminharzlösung wird in die viskose, wässrige Zubereitung 226 g lösemittelfreies Silicon-Gemisch folgender Zusammensetzung unter Rühren eingearbeitet:
93,0% Vinyl-dimethyl-polysiloxan mit im wesentlichen endständigen Vinyl-Gruppen
6,85% Trimethylsiloxy-methylhydrogen-siloxy-Gruppen enthaltendes Poly-dimethylpolysiloxan

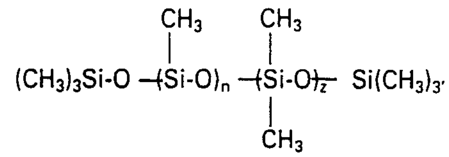

wobei n, z = ganze Zahlen > 2 sind (als Komponente X),
0,15% cyclisches Methyl-vinyl-tetrasiloxan (Komponente Y), welches ca. 1% Platin als Platin-Null-Komplex (als Komponente Z) enthält.

II) PUR-Dispersion P-1:
1.700 g (1,0 Mol) eines Mischpolyesters aus Hexandiol-1,6, Neopentylglykol und Adipinsäure werden mit 303 g (1,8 Mol) Hexan-1,6-diisocyanat zu einem NCO-Prepolymeren umgesetzt, dieses wird in wässriger Phase mit 152 g (0,8 Mol) Ethylendiamin-ethylsulfonsaurem Addukt von Ethylendiamin und 1 Mol Ethylensulfon, als Na-Salz Natrium als Kettenverlängerer zum Polyesterurethanharnstoff aufgebaut; Feststoffgehalt 40%.

III) Polyacrylat-Dispersion A 1:
40%ige Dispersion eines Mischpolymerisats aus: 960 Tl. Butylacrylat, 10 Tl. Itaconsäure, 25 Tl. Acrylamid und 5 Tl. N-Methylolacrylamid.

IV) Direktbeschichtung per Luftrakel
Polyamidgewebe von 100 $g/m^2$ Warengewicht wird mit der Streichpaste I) per Luftrakel beschichtet. Verwendet wird ein 1 mm breites Luftrakelmesser, die Laufgeschwindigkeit beträgt 10 m/min, die Trocken- und Reaktionstemperatur 120–150 °C, die Auflage an Feststoff 12 $g/m^2$.
Der weiche, gut gleitende Beschichtungsartikel wird anschliessend mit handelsüblichen Hydrophobiermitteln nachbehandelt. Der Artikel zeichnet sich durch sehr gute Wasch- und Chemischreinigungsbeständigkeit aus.

V) Direktbeschichtung per Rotationssiebdruck
Polyamidgewebe wie in IV) wird auf einer Rotationssiebdruckanlage (Fa. Stork, Boxmeer) mit einem 125 mesh-Sieb beschichtet. Laufgeschwindigkeit 10 m/min, Kanaltemperatur 150 °C, Auflage 10 $g/m^2$.

Beispiel 2

I) Pastenbereitung
900 g einer PUR-Dispersion P1 gemäss Beispiel 1/II und
100 g einer PUR-Dispersion gemäss DE 3 134 161/Beispiel 2 werden gemischt, mit 3,0 g eines Entschäumers auf Silicon-Basis versetzt und mit 50 g einer 4%igen wässrigen Lösung von Carboxy-methylcellulose-Na verdickt. Nach Zugabe von 25 g einer 50%igen, wässrigen Melaminharzlösung wird in die viskose wässrige Zubereitung 40 g lösemittelfreies, selbstvernetzbares Silicongemisch unter Rühren eingearbeitet. Zusammensetzung des Silicongemisches S gemäss Beispiel 1.

II) Direktbeschichtung per Luftrakel

Polyester/Baumwollgewebe von 120 g/m$^2$ Warengewicht wird mit der Streichpaste I) per Luftrakel beschichtet. Fahrgeschwindigkeit: 12 m/min.
Trocken- und Reaktionstemperatur: 120–150 °C
Feststoffauflage: 8 g/m$^2$.

Der sehr weiche, geschmeidige Artikel wird anschliessend mit handelsüblichen Hydrophobiermitteln ausgerüstet, z. B. mit Perlit[(R)]-SE/Perlit[(R)]-Si/SW (BAYER AG, D-509 Leverkusen), aus ca. 20 g/l bis 30 g/l-Hydrophobiermittel enthaltender Flotte.

Die Chemischreinigungsbeständigkeit des Artikels ist ausgezeichnet, die Waschechtheit gut.

Beispiel 3

I) Pastenbereitung (A)

600 g einer PUR-Dispersion P2 und
400 g einer Polyacrylat-Dispersion A2 werden nach Zusatz von 3 g eines Entschäumers auf Silicon-Basis mit 40 g einer 25%igen wässrigen Polyacrylsäurelösung verdickt und mittels conc. Ammoniak auf pH 8–9 eingestellt. Das verdickte Dispersionsgemisch hat eine Viskosität von ca. 6.000 mPas/25 °C. Nach Zusatz von 30 g eines Polyaziridins PA wird in die viskose, wässrige Zubereitung 600 g lösemittelfreies Silicon-Gemisch S gemäss Beispiel 1 ohne vorhergehendes Dispergieren eingerührt.

II) PUR-Dispersion P2

1.680 g (0,84 Mol) eines linearen Polypropylenglykol-polyethers OH-Zahl 56, 2,15 g Dimethylolpropionsäure (0,16 Mol), 16,0 g Triethylamin (0,16 Mol) werden mit 303 g Hexandiisocyanat-1,6 (1,80 Mol) zu einem NCO-Prepolymeren umgesetzt; dieses wird in wässriger Phase mit 30,0 g (0,5 Mol) Ethylendiamin und 47,5 g (0,25 Mol) Ethylendiamin-ethyl-sulfonsaurem Natrium als Kettenverlängerer zum Polyurethanharnstoff aufgebaut; Feststoffgehalt 40%.

III) Polyacrylat-Dispersion A2

40%ige Dispersion eines Mischpolymerisats aus: 400 Tl. Butylacrylat, 400 Tl. Ethylacrylat, 175 Tl. Acrylnitril, 10 Tl. Itaconsäure, 5 Tl. N-Methylolacrylamid, 10 Tl. Acrylamid.

IV) Polyaziridin PA

296 g (1.0 Mol) Trimethylolpropan-tris-acrylat werden bei 70 °C mit 171 g (3,0 Mol) Propylenimin (Methylaziridin) zum Tris-aziridin umgesetzt.

V) Direktbeschichtung

Ein Mischgewebe aus Polyester/Zellwolle von 140 g/m$^2$ Warengewicht wird wie in Beispiel 1 beschichtet.
Fahrgeschwindigkeit: 8 m/min
Trocken- und Reaktionstemperatur: 120–130 °C
Feststoffauflage: 10 g/m$^2$.

Der weiche, füllige Artikel wird anschliessend mit handelsüblichen Hydrophobiermitteln ausgerüstet. Die Chemischreinigungsbeständigkeit und die Waschechtheit des Artikels sind sehr gut.

IV) Pastenbereitung (B)

In die Streichpaste gemäss (A) werden anstatt eines Polyaziridins als Vernetzer 50 g eines Epoxidharzes, Epoxid-Äquivalent 120, Viskosität 150 mPas, eingearbeitet. Die Beschichtung erfolgt wie unter V).

VII) Vergleich ohne Polyurethan-Dispersion

1000 g einer Polyacrylat-Dispersion A2 werden wie in I) beschrieben nach Zusatz von 3 g eines Entschäumers auf Silicon-Basis mit 40 g einer 25%igen wässrigen Polyacrylsäurelösung verdickt und mittels conc. Ammoniak auf pH 8–9 eingestellt. Das verdickte Dispersionsgemisch hat eine Viskosität von ca. 5000 mPa.s bei 25 °C. Nach Zusatz von 30 g eines Polyaziridins (PA) wird in die viskose, wässrige Zubereitung 600 g lösemittelfreies Silicon-Gemisch S gemäss Beispiel 1 ohne vorhergehendes Dispergieren eingerührt.

Wie unter V) beschrieben, wird ein Polyester/Zellwollgewebe beschichtet. Der füllige Artikel wird anschliessend mit handelsüblichen Hydrophobiermitteln ausgerüstet. Die Waschbeständigkeit des Artikels ist gut, aber die Chemischreinigungsbeständigkeit ist recht mangelhaft.

**Patentansprüche**

1. Wässrige Dispersionszusammensetzungen insbesondere für wässrige, streichfähige Beschichtungs- oder Druckpasten, dadurch gekennzeichnet, dass sie
A) wässrige Dispersionen von Polyurethanen Aa) oder Gemische von wässrigen Dispersionen von Polyurethanen Aa) und wässrigen Dispersionen von Poly(meth)acrylaten Ab),
B) wässrige, carboxylgruppenhaltige Polymerlösungen als Verdicker,
C) in Wasser nicht vordispergierte, selbstvernetzende Polyorganosiloxansysteme und
D) Vernetzungsmittel für die Polyurethane (Aa), gegebenenfalls für die Poly(meth)acrylate (Ab), sowie für die carboxylgruppenhaltigen Polymeren der Komponente B,
enthalten.

2. Dispersionszusammensetzungen nach Anspruch 1, dadurch gekennzeichnet, dass als Poly(meth)acrylate Polymerisate aus (Meth)acrylsäureester mit $C_1$-$C_{18}$-Alkoholen und gegebenenfalls Acrylnitril, Acrylamid, N-Methylolacrylamid, N-Methoxymethyl-acrylamid, Acrylsäure, Itaconsäure bzw. deren Ammonium- oder Alkalisalze, eingesetzt werden.

3. Dispersionszusammensetzungen nach Anspruch 1 oder 2, dadurch gekennzeichnet, dass das Gewichtsverhältnis der in den wässrigen Dispersionen A) enthaltenen Polyurethane und gegebenenfalls enthaltenen Poly(meth)acrylate zu dem selbstvernetzenden Polyorganosiloxansystem C) 100:5 bis 100:200 beträgt.

4. Dispersionszusammensetzungen nach Ansprüchen 1 bis 3, dadurch gekennzeichnet, dass die Polyurethane Aa) aus aliphatischen und/oder cycloaliphatischen Polyisocyanatkomponenten aufgebaut sind.

5. Dispersionszusammensetzungen nach Ansprüchen 1 bis 4, dadurch gekennzeichnet, dass als selbstvernetzende Polyorganosiloxansysteme

C) Vinylgruppen tragende Polydimethylsiloxane, SiH-Gruppen tragende Polydimethylsiloxane mit einem Pt-Komplex als Katalysator und gegebenenfalls niedermolekulare cyclische Vinylmethylsiloxane eingesetzt werden.

6. Dispersionszusammensetzungen nach Ansprüchen 1 bis 5, dadurch gekennzeichnet, dass als wässrige, carboxylgruppenhaltige Polymerenlösungen B) wässrige Lösungen von Poly(meth)-acrylsäure und/oder Carboxymethylzellulosen oder deren Alkali- bzw. Ammoniumsalze eingesetzt werden.

7. Dispersionszusammensetzungen nach Ansprüchen 1 bis 6, dadurch gekennzeichnet, dass als Vernetzungsmittel D) Harnstoff- und/oder Melamin-Formaldehydharze und/oder Polyaziridine und/oder Polyepoxide eingesetzt werden.

8. Verfahren zur Herstellung von wässrigen Dispersionszusammensetzungen nach Ansprüchen 1 bis 7, dadurch gekennzeichnet, dass in
A) wässrige Dispersionen von Polyurethanen Aa) oder Gemische aus wässrigen Dispersionen von Polyurethanen Aa) und wässrigen Dispersionen von Poly(meth)acrylaten Ab),
B) wässrige, carboxylgruppenhaltige Polymerlösungen als Verdicker eingebracht und
C) mit selbstvernetzenden Polyorganosiloxansystemen, ohne deren vorhergehende Dispergierung in Wasser, vermischt werden
und dass diesen Dispersionszubereitungen
D) Vernetzungsmittel für die Polyurethane Aa), für die carboxylgruppenhaltigen Polymeren der Komponente B) und für die gegebenenfalls vorhandenen Poly(meth)acrylate Ab)
zugesetzt werden.

9. Verwendung der Dispersionszusammensetzungen nach Ansprüchen 1 bis 7 zur Beschichtung und zum Bedrucken von Unterlagen, insbesondere zum Beschichten und Bedrucken von textilen oder lederartigen Unterlagen in geringen Auflagemengen unter Ausbildung vernetzter Beschichtungen nach dem Trocknungsvorgang.

**Claims**

1. Aqueous dispersion compositions, in particular for aqueous coating or printing pastes which can be spread coated, characterised in that they contain
A) aqueous dispersions of polyurethanes Aa) or mixtures of aqueous dispersions of polyurethanes Aa) and aqueous dispersions of poly(meth)acrylates Ab),
B) aqueous polymer solutions containing carboxyl groups as thickeners,
C) self-cross-linking polyorganosiloxane systems which have not been predispersed in water, and
D) cross-linking agents for the polyurethanes (Aa), optionally for the poly(meth)acrylates (Ab) and for the carboxyl group-containing polymers of component B.

2. Dispersion compositions according to claim 1, characterised in that the poly(meth)acrylates used are polymers of (meth)acrylic acid esters with $C_1$-$C_{18}$ alcohols and optionally acrylonitrile, acrylamide, N-methylolacrylamide, N-methoxymethylacrylamide, acrylic acid, itaconic acid or their ammonium salts or alkali metal salts.

3. Dispersion compositions according to claims 1 or 2, characterised in that the ratio by weight of the polyurethanes and optionally poly(meth)acrylates contained in the aqueous dispersions A) to the self-cross-linking polyorganosiloxane system C is from 100:5 to 100:200.

4. Dispersion compositions according to claims 1 to 3, characterised in that the polyurethanes Aa) are synthesized from aliphatic and/or cycloaliphatic polyisocyanate components.

5. Dispersion compositions according to claims 1 to 4, characterised in that the self-cross-linking polyorganosiloxane systems C) used are polydimethylsiloxanes containing vinyl groups, polydimethylsiloxanes containing SiH groups with a platinum complex as catalyst and optionally low molecular weight cyclic vinylmethylsiloxanes.

6. Dispersion compositions according to claims 1 to 5, characterised in that the aqueous carboxyl group-containing polymer solutions B) used are aqueous solutions of poly(meth)acrylic acid and/or carboxymethyl celluloses or their alkali metal or ammonium salts.

7. Dispersion compositions according to claims 1 to 6, characterised in that the cross-linking agents D) used are urea and/or melamine formaldehyde resins and/or polyaziridines and/or polyepoxides.

8. Process for the preparation of aqueous dispersion compositions according to claims 1 to 7, characterised in that
A) aqueous dispersions of polyurethanes Aa) or mixtures of aqueous dispersions of polyurethanes Aa) and aqueous dispersions of poly(meth)acrylates Ab) and the said dispersions are mixed with
B) aqueous polymer solutions containing carboxyl groups are introduced as thickeners into
C) self-cross-linking polyorganosiloxane systems without these being previously dispersed in water, and in that
D) cross-linking agents for the polyurethanes Aa), for the carboxyl group-containing polymers of component B) and for the poly(meth)acrylates Ab) optionally present are added to these dispersion preparations.

9. Use of the dispersion compositions according to claims 1 to 7 for coating and printing on supports, in particular for coating and printing textiles or leather-like supports, the substances being applied in small quantities and cross-linked coatings being formed after the drying process.

**Revendications**

1. Compositions aqueuses en dispersion, notamment pour pâtes aqueuses d'enduction ou d'impression pouvant être étalées, caractérisées en ce qu'elles contiennent
A) des dispersions aqueuses de polyuréthannes Aa) ou des mélanges de dispersions aqueuses de polyuréthannes Aa) et de dispersions aqueuses de poly(méth)acrylates Ab),

B) des solutions aqueuses de polymères porteurs de groupes carboxyle comme épaississant,
C) des systèmes de polyorganosiloxanes autoréticulants, non préalablement dispersés dans l'eau et
D) des agents de réticulation pour les polyuréthannes (Aa), le cas échéant pour les poly(méth)-acrylates (Ab), ainsi que pour les polymères porteurs de groupes carboxyle du composant B.

2. Compositions en dispersion suivant la revendication 1, caractérisées en ce qu'on utilise comme poly(méth)acrylates des produits de polymérisation d'esters d'alcools en $C_1$ à $C_{18}$ d'acide (méth)acrylique et, le cas échéant, de l'acrylonitrile, de l'acrylamide, du N-méthylolacrylamide, du N-méthoxyméthylacrylamide, de l'acide acrylique, de l'acide itaconique ou leurs sels d'ammonium ou de métaux alcalins.

3. Compositions en dispersion suivant la revendication 1 ou 2, caractérisées en ce que le rapport en poids des polyuréthannes contenus dans les dispersions aqueuses A) et des poly(méth)acrylates contenus, le cas échéant, au système de polyorganosiloxane autoréticulant C) a une valeur de 100:5 à 100:200.

4. Compositions en dispersion suivant les revendications 1 à 3, caractérisées en ce que les polyuréthannes Aa) sont édifiés à partir de composants du type de polyisocyanates aliphatiques et/ou cycloaliphatiques.

5. Compositions en dispersion suivant les revendications 1 à 4, caractérisées en ce qu'on utilise comme systèmes de polyorganosiloxanes autoréticulants C) des polydiméthylsiloxanes porteurs de groupes vinyle, des polydiméthylsiloxanes porteurs de groupes SiH avec un complexe de platine comme catalyseur et, le cas échéant, des vinylméthylsiloxanes cycliques de bas poids moléculaire.

6. Compositions en dispersion suivant les revendications 1 à 5, caractérisées en ce qu'on utilise comme solutions aqueuses de polymères B) porteurs de groupes carboxyle des solutions aqueuses d'acides poly(méth)acryliques et/ou de carboxyméthylcelluloses ou de leurs sels de métaux alcalins ou d'ammonium.

7. Compositions en dispersion suivant les revendications 1 à 6, caractérisées en ce qu'on utilise comme agents réticulants D) des résines urée-formaldéhyde et/ou mélamine-formaldéhyde et ou des polyaziridines et/ou des polyépoxydes.

8. Procédé de production de compositions aqueuses en dispersion suivant les revendications 1 à 7, caractérisé en ce qu'on incorpore dans
A) des dispersions aqueuses de polyuréthannes Aa) ou des mélanges de dispersions aqueuses de polyuréthannes Aa) et de dispersions aqueuses de poly(méth)acrylates Ab),
B) des solutions aqueuses de polymères porteurs de groupes carboxyle comme épaississants et on mélange
C) avec des systèmes de polyorganosiloxanes autoréticulants, sans les disperser préalablement dans l'eau, et on ajoute à ces préparations en dispersion
D) des agents réticulants pour les polyuréthannes Aa), pour les polymères porteurs de groupes carboxyle du composant B) et pour les poly(méth)-acrylates Ab) éventuellement présents.

9. Utilisation des compositions en dispersion suivant les revendications 1 à 7 pour l'enduction et pour l'impression de substrats, notamment pour l'enduction et l'impression de substrats textiles ou semblables au cuir en faibles quantités appliquées, avec formation de revêtements réticulés après le processus de séchage.